# EUROPEAN PATENT SPECIFICATION

(11) **EP 0 985 819 B1**
(45) Date of publication and mention of the grant of the patent: **27.08.2003**
(21) Application number: 99117883.1
(22) Date of filing: 10.09.1999
(51) Int. Cl.: F02M 25/07, F02B 67/10

(54) **Arrangement of fuel pump and EGR valve unit in an in-cylinder injection engine**
Anordnung der Brennstoffpumpe und AGR Ventil in einer Brennkraftmaschine mit Direkteinspritzung
Agencement de pompe à carburant et de soupape RGE dans un moteur à injection directe de carburant

(30) Priority: 10.09.1998 JP 25683098; 10.09.1998 JP 25686598
(43) Date of publication of application: 15.03.2000
(73) Proprietor: YAMAHA HATSUDOKI KABUSHIKI KAISHA, Iwata-shi Shizuoka-ken, 438 (JP)
(72) Inventor: Hideyuki, Ishiyama, c/o Yamaha Hatsudoki K. K., Iwata-shi, Shizuoka-ken, 438 (JP)
(74) Representative: Grünecker, Kinkeldey, Stockmair & Schwanhäusser Anwaltssozietät

(56) References cited:
- EP-A- 0 814 246
- US-A- 5 115 789
- US-A- 5 609 143
- US-A- 5 690 082
- PATENT ABSTRACTS OF JAPAN vol. 1998, no. 06, 30 April 1998 (1998-04-30) & JP 10 054254 A (MAZDA MOTOR CORP), 24 February 1998 (1998-02-24)
- PATENT ABSTRACTS OF JAPAN vol. 1998, no. 02, 30 January 1998 (1998-01-30) & JP 09 264153 A (MAZDA MOTOR CORP), 7 October 1997 (1997-10-07)

## Description

This invention relates to an in-cylinder injection engine in which fuel is injected directly into a combustion chamber by injectors.

In such a type of conventional in-cylinder injection engine, for the purpose of increasing the fuel injection pressure compared with an ordinary engine in which fuel is injected into intake passages, a relatively large high pressure fuel pump is employed for pumping fuel to the injectors.

The high pressure fuel pump is mounted to one end of the cylinder head in the axial direction of the camshaft and its input shaft is connected to the intake camshaft or the exhaust camshaft so as to use the engine as a power source and to be driven without additional transmission devices. In some conventional in-cylinder injection engines, the ignition unit with ignition coils is mounted to one of the intake camshaft and the exhaust camshaft, to which is not connected the high pressure fuel pump.

In addition, since the in-cylinder injection engine is sometimes operated with the air-fuel ratio of the mixture set to the so-called super-lean one, a structure is employed so as to reduce NOx emissions in the exhaust gas even in such an operating condition, in which a large amount of exhaust gas is inducted into the intake system by an EGR unit compared with an ordinary engine.

The EGR unit is arranged such that the exhaust pipe and the intake manifold are connected by a pipe for recirculating exhaust gas and the EGR valve unit is disposed in this pipe and adapted to be opened/closed in response to the engine operating conditions.

For the purpose of inducting a large amount of exhaust gas into the intake system compared with an ordinary conventional engine, this EGR valve unit is also of a large-sized type.

However, the problem with the conventional in-cylinder injection engine is how the relatively large-sized high pressure fuel pump and EGR valve unit can be disposed around the engine. This is because a larger engine mounting space is necessary depending on the positions in which these large-sized auxiliary equipment are disposed. There is a need to provide a smaller space for an engine, depending on auxiliary equipment mounted thereon, especially for automobile engines, for the purpose of forming a smaller engine room to provide a larger space for passengers.

Accordingly, it is an objective of the present invention to provide an in-cylinder injection engine which occupies a relatively small space with a large-sized high pressure fuel pump and an EGR valve unit mounted thereon.

According to the present invention this objective is solved by an in-cylinder injection engine wherein one of a high pressure fuel pump for pumping fuel to injectors for injecting fuel directly into a combustion chamber, and an EGR valve unit, is mounted to one end of a cylinder head , in the axial direction of a camshaft, on the side of an intake camshaft, and the other, on the side of an exhaust camshaft.

According to this invention, the high pressure fuel pump and the EGR valve unit are disposed in line in the direction perpendicular to the intake camshaft and the exhaust camshaft, so that these two large-sized auxiliary equipment can be mounted to the cylinder head while preventing size increase in the axial direction of the camshafts.

The in -cylinder injection engine according to another embodiment of the invention is characterized in that, in the in-cylinder injection engine according to the foregoing invention, the EGR valve unit is located on the intake camshaft side. According to this invention, the distance between the EGR valve unit and the intake passages can be smaller.

The in-cylinder injection engine according to a further embodiment of the invention is characterized in that, in the in-cylinder injection engine according to the invention, the high pressure fuel pump is located on the intake camshaft side. According to this invention, a fuel feeding pipe between the high pressure fuel pump and the injectors can be shorter.

The in-cylinder injection engine according to a still further embodiment of the invention is characterized in that, in the in-cylinder injection engine according to the invention, ignition units with an ignition coil and a switching element are mounted to ignition plugs, and ignition signals are sent to said ignition units from an ignition timing control device.

According to this embodiment of the invention, compared with a case where an ignition unit with ignition coils is provided on the cylinder head at the side of the camshaft end, the high pressure fuel pump and the EGR valve unit need not to protrude substantially from the cylinder head so as to avoid interference with the ignition unit.

The EGR unit is arranged such that the exhaust pipe and the intake manifold are connected by a pipe for recirculating exhaust gas, and this pipe is fitted with an EGR control valve which is adapted to be opened/closed in response to the engine running state.

However, the induction of a large amount of exhaust gas into the intake system, increases exhaust gas flowing through the EGR control valve compared with an ordinary engine, raising a problem that the EGR control valve causes easy wear in the contact portion between the valve and valve seat.

The EGR control valve is opened when the engine is in a low and intermediate operating range, and closed when the accelerator is closed. In other words, it repeats frequent opening/closing movements, so that if it is in the state of overheating, the contact portion wears off severely, thus decreasing durability.

Also, a problem is posed that the intake air temperature is raised due to induction of a large amount of exhaust, which lowers the charging efficiency of intake air.

To eliminate such disadvantages, it is contemplated that an EGR control valve or a cooling device for cooling exhaust gas are provided, However, a simple additional cooling device will result in a larger-sized EGR unit.

In view of this it is advantageous when the EGR unit comprises an EGR control valve and a valve housing with said EGR control valve therein, said valve housing being formed with an exhaust gas passage and a cooling water passage each extending from one end to the other end of said valve housing, and said exhaust gas passage and cooling water passage being adapted to cross in the vicinity of the mounting portion of the EGR control valve in the valve housing.

According to this embodiment, heat of the valve housing is transmitted by heat transfer to the cooling water flowing through the cooling water passage, so that exhaust gas flowing through the exhaust gas passage in the valve housing and the EGR control valve mounted to the valve housing, can be cooled by cooling water. In addition, the exhaust gas passage and the cooling water passage are adapted to cross in the mounting portion of the EGR control valve, so that cooling water can be inducted in the vicinity of the EGR control valve, resulting in an effective cooling of the EGR control valve.

The EGR valve unit foran in-cylinder injection engine according to another embodiment of the invention is characterized that, in the EGR valve unit for an in-cylinder injection engine according to the foregoing embodiment, the EGR control valve has a valve adapted to reciprocate therein, the exhaust gas passage and cooling water passage are formed such that they are overlapped to each other in one end and the other end of the valve housing, in the opening/closing direction of said valve, and their positions with respect to the opening/closing direction of said valve are reversed at said one end and said other end.

According to this embodiment, a structure is employed in which the exhaust gas passage is opened/closed by a reciprocating valve, so that the upstream side and the downstream side of the exhaust gas passage from the EGR control valve (one end and the other end of the valve housing) are formed such that they are located, in deviating relation, on one side and the other side in the opening/closing direction of the valve, respectively. The upstream side and the downstream side of the cooling water passage are formed such that they are overlapped to the upstream side and the downstream side of the exhaust gas passage, in the opening/closing direction of the valve, respectively, so that the cooling water passage can be formed using dead spaces formed, for the upstream side and the downstream side of the exhaust gas passage, on one side and the other side in the opening/closing direction of the valve.

The EGR valve unit for an in-cylinder injection engine according to a further embodiment of the invention is characterized in that, the EGR control valve is configured as an assembly, with a valve, a valve seat, and a valve drive unit assembled in one case, and said EGR control valve is mounted to the valve housing.

According to this embodiment, since no valve seat of the EGR control valve is necessary to be provided in the valve housing, no valve seat support section is needed in the valve housing. Therefore, the restriction caused by the installation of the valve seat, that is, the restriction of the valve seat support section being formed firm or of preventing positional changes of the valve seat due to thermal expansion, is eliminated, so that the degree of freedom in designing in the formation of the exhaust gas passage and the cooling water passage in the valve housing is higher and both passages can be formed into ideal shapes.

Further, in the EGR valve unit of this embodiment, if only the shape and size of the mounting portion of the EGR control valve in the valve housing are the same, other portions of the valve housing can be configured freely. That is, even if multiple kinds of valve housings are formed corresponding to the engine models, only one type of EGR control valve may be sufficient.

The EGR valve unit for an in-cylinder injection engine according to a still further embodiment of the invention is characterized in that, the valve housing is fixed to the outer wall of the engine, the upstream end of the cooling water passage opened to the mating surface of the valve housing on the engine side, is connected to a cooling water outlet of the engine, and the portion of the cooling water passage corresponding to the EGR control valve is formed such that the EGR control valve is surrounded from at least three sides, including the side of the EGR control valve located opposite to the engine.

According to this embodiment of the invention, the EGR control valve is cooled, on the engine side, by heat transfer from the valve housing to the engine, and on the opposite side from the engine, by cooling water flowing through the cooling water passage formed surrounding the side.

The cooling water flows from the engine directly into the valve housing without interposing a pipe.

The EGR valve unit for an in-cylinder injection engine according to another embodiment of the invention is characterized in that, the downstream side of the exhaust gas passage is connected, through a metal pipe, to an intake passage in the middle of an intake manifold, and the upstream end of the intake manifold is fixed to the valve housing.

According to this embodiment, the middle portion and the upstream end of the intake manifold supported, at its downstream end, on the engine, are connected to the valve housing, so that the upstream side of the intake manifold, that is, the throttle valve mounting portion protruding from the engine, can be supported firmly by the EGR valve unit. Thus, no stay is necessary for supporting only the throttle valve mounting portion.

Other advantageous embodiments of the present invention are laid down in further dependent claims.

In the following, the present invention is explained in greater detail with respect to several embodiments thereof in conjunction with the accompanying drawings, wherein:
Fig. 1 is a front view of the in-cylinder injection engine equipped with the EGR valve unit according to this invention.
Fig. 2 is a side view of the engine as seen from the intake manifold side.
Fig. 3 is a plan view of the engine.
Fig. 4 is an enlarged front view showing one end of the cylinder head. Fig. 5 is a perspective view showing one end of the cylinder head.
Fig. 6 is a longitudinal sectional view of the EGR valve unit.
Fig. 7 is a front view of the end portion of the cylinder head of another embodiment.
Fig. 8 is a front view of the in-cylinder injection engine equipped with the EGR valve unit according to this invention.
Fig. 9 is a side view of the engine as seen from the intake manifold side.
Fig. 10 is a plan view of the engine.
Fig. 11 is an enlarged front view of the mounting portion of the EGR valve unit.
Fig. 12 is an exploded perspective view of the cylinder head and the EGR valve unit.
Fig. 13 is a sectional view of the EGR valve unit taken on line VI-VI of Fig. 11.
Fig. 14 is a sectional view taken on line VII-VII of Fig. 13.
Fig. 15 is a view of the EGR valve unit as seen from the downstream side.
Fig. 16 is a sectional view taken on line IX-IX of Fig. 14.

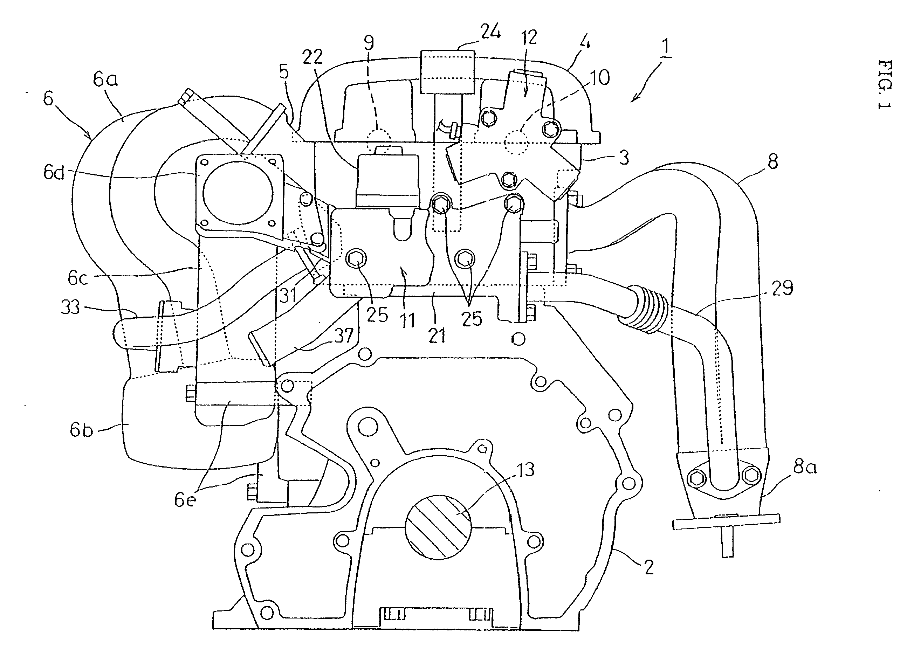

Now, an embodiment of the in-cylinder injection engine according to this invention will be described in detail below with reference to Figs. 1-6.

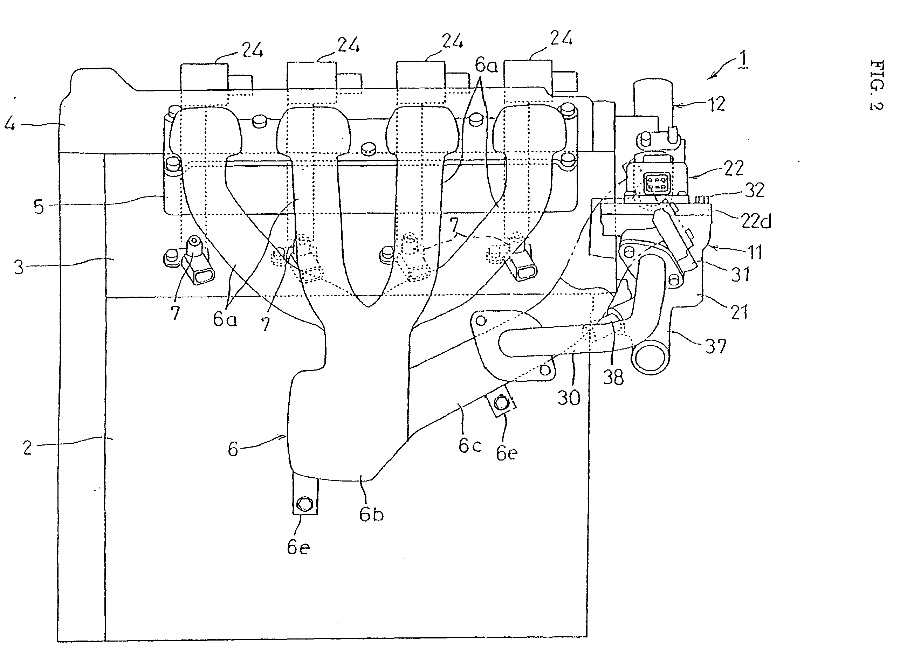

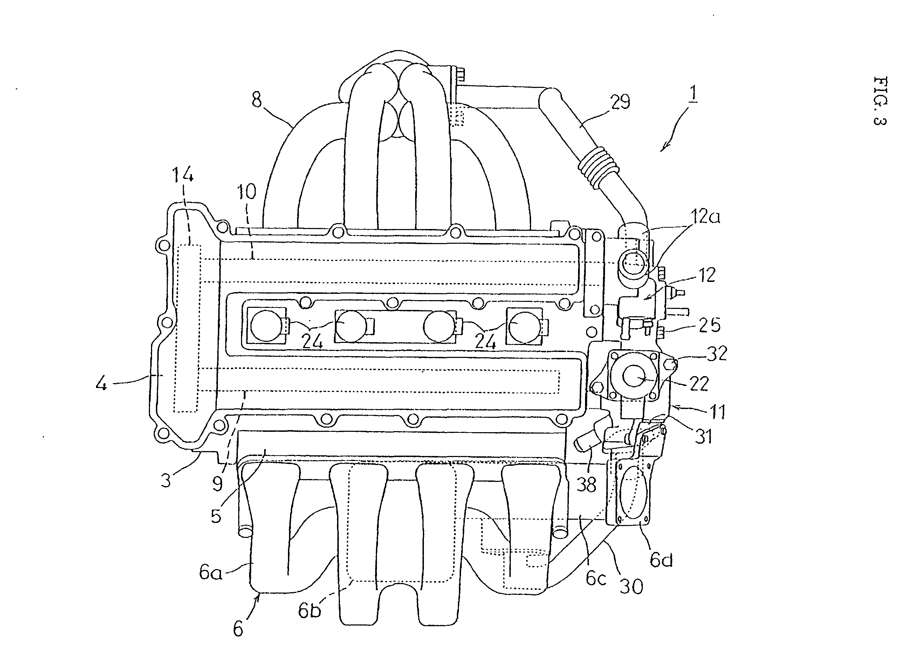

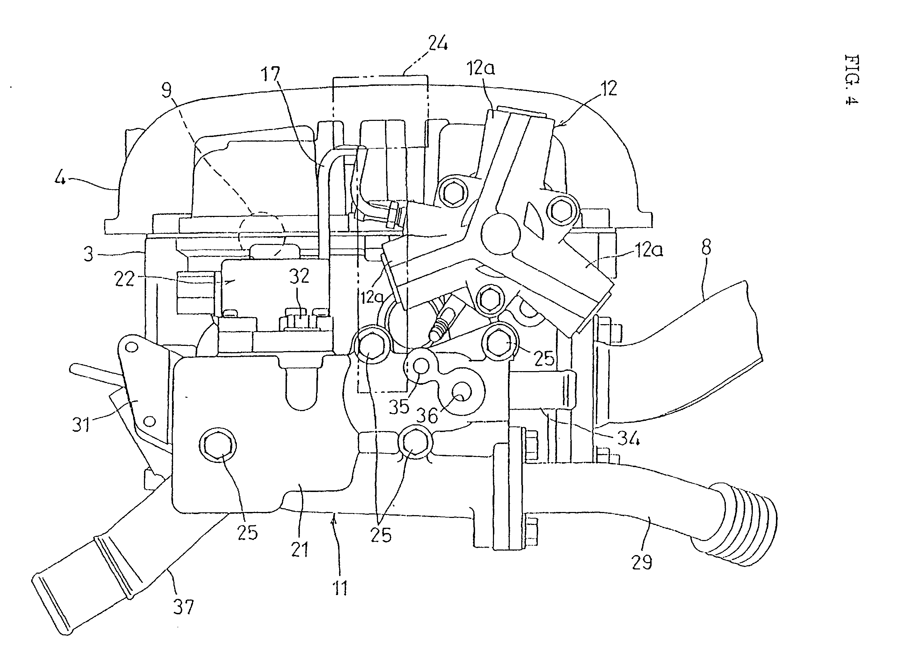

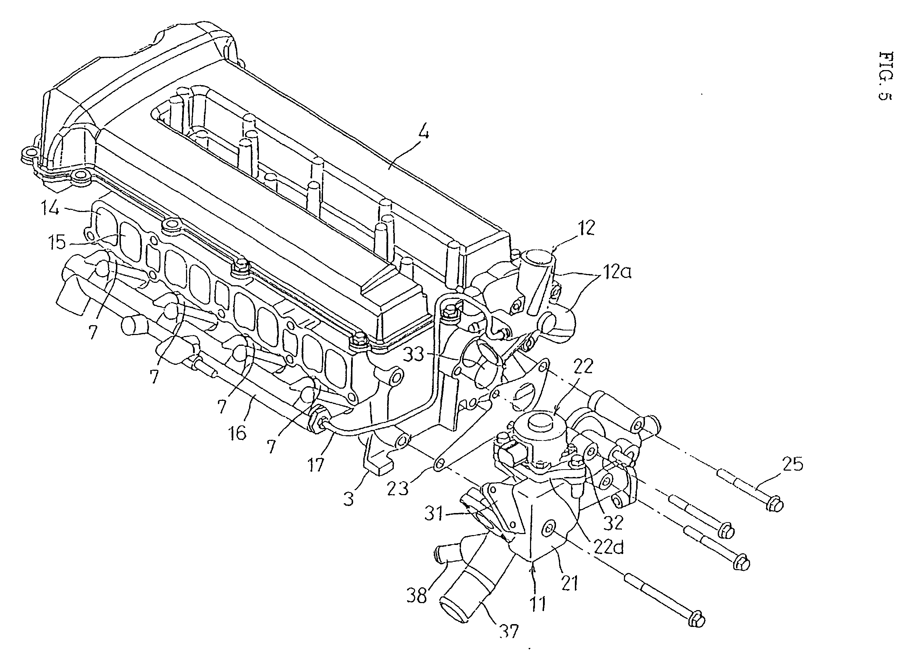

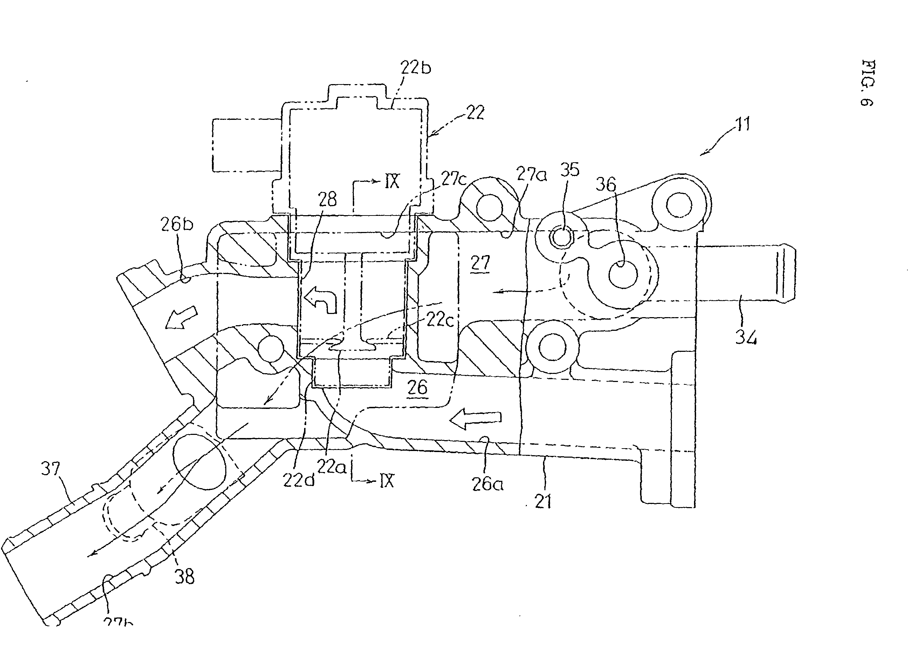

Fig. 1 is a front view of the in-cylinder injection engine equipped with the EGR valve unit according to this invention, Fig. 2 a side view of the engine as seen from the intake manifold side, Fig. 3 a plan view of the engine, Fig. 4 an enlarged front view showing one end of the cylinder head, Fig. 5 a perspective view showing one end of the cylinder head, and Fig. 6 a longitudinal sectional view of the EGR valve unit.

In these figures, numeral 1 designates an in-cylinder injection engine of this embodiment. The engine 1, of a water-cooling DOHC type four-cylinder automobile engine, comprises a cylinder block 2, cylinder head 3, and head cover 4, etc. The engine 1 is mounted to a vehicle body such that the lateral axis of Fig. 1 is oriented approximately horizontal.

To the cylinder head 3, as shown in Fig. 1, are mounted, on one side, an intake manifold 6 through an intake control valve unit 5, and as shown in Figs. 2 and 5, injectors 7 one for each cylinder, and on the other side, exhaust pipes 8. To one end of the cylinder head 3 in the axial direction of an intake camshaft 9 and an exhaust camshaft 10 are mounted, as shown in Figs. 1 and 3, an EGR valve unit 11 (described later) and a high pressure fuel pump 12. On the other end of this engine in the axial direction of the two camshafts 9, 10 is disposed, as shown in Fig. 3, a power transmission device 14 for transmitting the rotation of a crankshaft 13 (see Fig. 1) to both camshafts 9, 10.

The intake control valve unit 5 has intake air passages connected to primary ports 14 (see Fig. 5) and secondary ports 15, each formed for a respective cylinder, and is provided with opening/closing valves for opening/closing the intake passages connected to the secondary ports 15.

The intake manifold 6 comprises branch pipes 6a each formed for a respective cylinder and fixed to the intake control valve unit 5, a surge tank 6b to which branch pipes 6a are connected, and an intake inflow pipe 6c extending from the surge tank 6c toward the EGR valve unit 11 in the axial direction of the intake camshaft 9. At the upstream end of the intake inflow pipe 6c is formed integrally a flange 6d for connecting a throttle valve device (not shown).

Each injector 7 is arranged such that it is disposed between two intake ports for each cylinder, that is, between the primary port 14 and the secondary port 15 and fuel is injected directly into the combustion chamber (not shown) from between both ports and from the bottom (mating surface with the cylinder block) side of the cylinder head. The fuel inlet of each injector 7 is connected to a fuel delivery port of the high pressure fuel pump 12, through a fuel rail designated by a numeral 16 in Fig. 5 and a fuel supply pipe 17 connected to one end of the fuel rail 16.

The high pressure pump 12, which is mounted at said one end of the cylinder head 3 on the exhaust camshaft 10 side, is arranged such that the rotation of the exhaust camshaft 10 causes plungers (not shown) to reciprocate in three cylinders 12a to pump, to injectors 7, the fuel supplied from a low pressure fuel pump (not shown).

The EGR valve unit 11, which is fitted in a well-known conventional EGR unit for inducting exhaust gas into the intake passages, comprises, as shown in Figs. 4 and 5, a valve housing 21 and an EGR control valve 22 mounted to the valve housing 21, the valve housing 21 being fixed to said one end of the cylinder head 3 on the intake camshaft 9 side through a sealing member 23.

Ignition coils, which are mounted to said one end of the cylinder head in the conventional engine, are connected, in this engine, directly to the ignition plugs so as not to interfere with the EGR valve unit 11 and the high pressure fuel pump 12. The ignition device of the engine 1 is arranged such that ignition units 24 with an ignition coil and a switching element are attached to ignition plugs, and ignition signals are sent out from an ignition timing control device not shown in the ignition unit 24.

The EGR valve unit 11 is fixed to the cylinder head 3, as shown in Fig. 4, with four fixing bolts 25, and knock pins (not shown) are inserted in the bolt fastening portions so as to improve positioning accuracy of fixing. This knock pin, formed in a cylindrical shape, is fitted, with the fixing bolt 25 passing therethrough, in both of the valve housing 21 and the cylinder head 3.

The valve housing 21 is configured such that as shown in Fig. 1, it extends from one side to which the intake manifold 6 of the cylinder head 3 is connected, to the other side, just under the high pressure fuel pump 12, to which the exhaust pipe 8 is connected, and that as shown in Fig. 6, an exhaust gas passage 26 and a cooling water passage 27 extend, inside the housing, in the same direction as said extending direction of the valve housing 21.

The exhaust gas passage 26 is formed such that a recess 28 for receiving the EGR control valve 22 constitutes part of the passage 26, and its upstream end opened to one end of the valve housing 21 on the right side of Fig. 6, is connected, as shown in Figs. 1 and 3, to a collective section 8a of the exhaust pipe 8 through an exhaust gas induction pipe 29.

The downstream end of the exhaust gas passage 26 is open to the other end of the valve housing 21, and as shown in Fig. 3, connected to the intake passage in the intake manifold 6 through an exhaust gas feed pipe 30. The exhaust gas feed pipe 30, made of a metal pipe, is fixed at the upstream end to the valve housing 21, and at the downstream end to the middle of the intake inflow pipe 6c in the intake manifold 6.

The intake inflow pipe 6c is fixed at the upstream end to a bracket 31 formed integral with the valve housing 21 by the flange for mounting throttle valve device 6d. The valve housing 21, which is located with respect to the cylinder head using the knock pins, can be connected to the intake manifold 6 with improved accuracy. The intake manifold 6, as shown in Fig. 2, is fixed to the cylinder block 2 by fixing stays 6e provided on the surge tank 6b and on the intake inflow pipe 6c at the downstream side.

The EGR control valve 22 fitted in the recess 28 of the exhaust gas passage 26, is arranged such that a valve designated by a numeral 22a in Fig. 6 is reciprocated vertically by a valve drive unit 22b, and the valve 22a, a valve seat 22c, and the valve drive unit 22b are assembled in one case 22d as an assembly. Also, the EGR control valve 22 is fixed, with fixing bolts 32 (see Figs. 2-5), to the upper portion of the valve housing 21, with the bottom of the case 22d fitted in the recess 28. Mounting position of the EGR control valve 22 is set such that it is located, as shown in Fig. 4, on the intake camshaft 9 side when the valve housing 21 is fixed to the cylinder head 3.

The case 22d is formed with openings for passages of exhaust gas in the bottom wall and the inner wall above the valve seat 22c so that a space under the valve drive unit 22b constitutes part of the exhaust gas passage. That is, as shown in Fig. 6, engagement of the valve 22a with the valve seat 22c causes the exhaust gas passage to be closed, and downward separation of the valve 22a from the valve seat 22c causes the exhaust gas passage to be opened. Between the case 22d and the valve housing 21 is provided a sealing member (not shown) for preventing exhaust gas from leaking through the gap between the case 22d and the recess 28.

The valve drive unit 22b is provided with a motor as a power source, and adapted to move the valve 22a to a completely closed position, as shown in Fig. 6, when a throttle valve (not shown) of the engine 1 is closed or the engine is in a high speed and high load operating range, and to move the valve 22a downwardly from the completely closed position when the engine is in a low speed and low load, and an intermediate speed and intermediate load operating range. Opening of the valve 22a is adjusted in response to engine speed and/or engine load.

The cooling water passage 27 comprises an upstream section 27a formed above the upstream section 26a of the exhaust gas passage 26 in overlapping relation viewed from above, a downstream section 27b formed below the downstream section 26b of the exhaust gas passage 26 in overlapped relation viewed from above, and a communication section 27c formed surrounding laterally the recess 28 for receiving the EGR control valve 22 for providing communication between the upstream section 27a and the downstream section 27b.

The upstream section 27a of the cooling water passage 27 is arranged such that its upstream end is open to the mating surface of the valve housing 21 on the cylinder head 3 side, and said opening is connected to a cooling water outter 33 (see Fig. 5) of the cylinder head 3 when the valve housing 21 is fixed to the cylinder head 3. Numeral 34 designates a pipe connected to the upstream section 27a of the cooling water passage 27 in Fig. 6 for taking out hot water for a heater. Numeral 35 represents a pipe for air vent, and numeral 36 a hole used for fitting a water temperature sensor.

The downstream section 27b of the cooling water passage 27 is connected to a radiator (not shown) from a primary drain pipe 37 formed integral with the valve housing 21, through a pipe (not shown) . In this embodiment, a secondary drain pipe 38 is branched off from the primary drain pipe 37, and cooling water is inducted toward the inlet of a cooling water pump (not shown) from the secondary drain pipe 38 through a bypass pipe (not shown).

The cooling system of the engine 1 has a structure in which cooling water is drawn into the cooling water pump from a radiator through a thermostat, pumped from the cooling water pump to the cylinder block 2 and cylinder head 3, and returned to the radiator from the cooling water outlet 33 through the EGR valve unit 11. When the thermostat is closed, cooling water is inducted into the upstream side from the cooling water pump, from the secondary drain pipe 38 through the bypass pipe without passing through the radiator.

In the in-cylinder injection engine 1 as described above, a high pressure fuel pump 12 for pumping fuel to injectors 7, is mounted to one end of a cylinder head 3, in the axial direction of a camshaft, on the side of an intake camshaft 10, and an EGR valve unit 11, on the side of an exhaust camshaft 9. Therefore, the high pressure fuel pump 12 and the EGR valve unit 11 are disposed in line in the direction perpendicular to the intake camshaft 9 and the exhaust camshaft 10, so that these two large-sized auxiliary equipment can be mounted to the cylinder head while preventing size increase in the axial direction of the camshafts.

Further, as a result of the EGR valve unit 11 being located on the intake camshaft side, the distance between the EGR valve unit 11 and the intake passages in the intake manifold 6 can be smaller, so that exhaust gas inducted from the EGR valve unit 11 into the intake passages can be controlled with good response.

Furthermore, in this in-cylinder injection engine 1, ignition units 24 with an ignition coil and a switching element are mounted to ignition plugs, and ignition signals are sent to said ignition units 24 from an ignition timing control device. Therefore, compared with a case where an ignition unit with ignition coils is provided on the cylinder head at the side of the camshaft end, the high pressure fuel pump 12 and the EGR valve unit 11 need not to protrude substantially from the cylinder head 3 so as to avoid interference with the ignition unit.

A second embodiment:

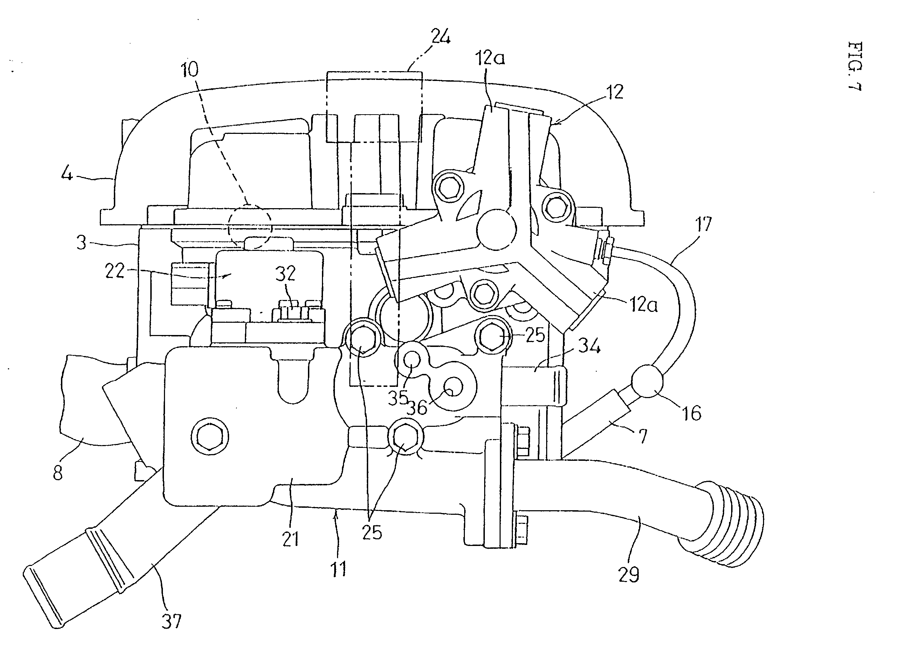

The high pressure fuel pump 12 can be disposed on the intake camshaft 9 side, as shown in Fig. 7.

Fig. 7 is a front view of the end portion of the cylinder head of another embodiment, and in the figure, like or equivalent parts as described in Figs. 1-6 are designated by like numerals, detailed description being omitted.

In the cylinder head 3 shown in Fig. 3, the intake camshaft (not shown) is disposed on the right side of the figure, and the exhaust camshaft 10 on the opposite side; the high pressure fuel pump 12 is mounted at one end of the camshaft in the axial direction on the intake camshaft side, and the EGR valve unit 11, on the exhaust camshaft 10 side.

As a result of this arrangement, a fuel feeding pipe (fuel feed pipe 17) between the high pressure fuel pump 12 and the injectors 7 can be shorter, so that compared with the first embodiment, pressure loss of the fuel in pumping from the high pressure fuel pump 12 to injectors 7, can be decreased.

According to the invention as described above, the high pressure fuel pump and the EGR valve unit are disposed in line in the direction perpendicular to the intake camshaft and the exhaust camshaft, so that the high pressure fuel pump and the EGR valve unit can be mounted to the cylinder head while preventing size increase in the axial direction of the camshafts. Therefore, an in-cylinder injection engine can be provided which occupies a relatively small space with a large-sized high pressure fuel pump and an EGR valve unit mounted thereon.

According to an embodiment of the invention, the distance between the EGR valve unit and the intake passages can be smaller, so that exhaust gas inducted from the EGR valve unit into intake passages can be controlled with good response.

According to another embodiment of the invention, a fuel feeding pipe between the high pressure fuel pump and the injectors can be shorter, so that pressure loss of the fuel in pumping from the high pressure fuel pump to injectors, can be decreased.

According to a further embodiment of the invention, compared with a case where an ignition unit with ignition coils is provided on the cylinder head at the side of the camshaft end, the high pressure fuel pump and the EGR valve unit need not to protrude substantially from the cylinder head so as to avoid interference with these members.

Therefore, a compacter in-cylinder injection engine can be provided.

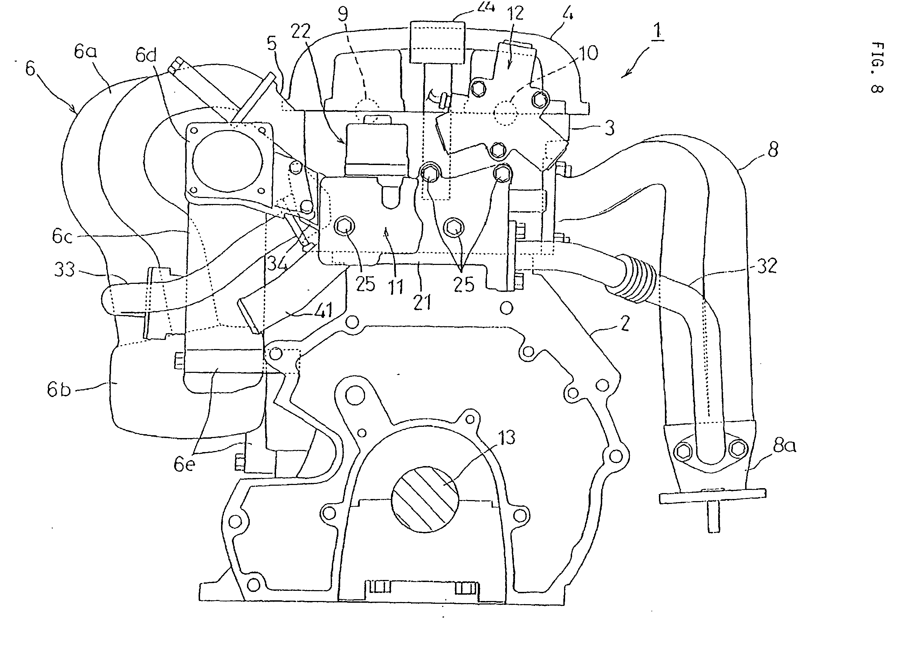

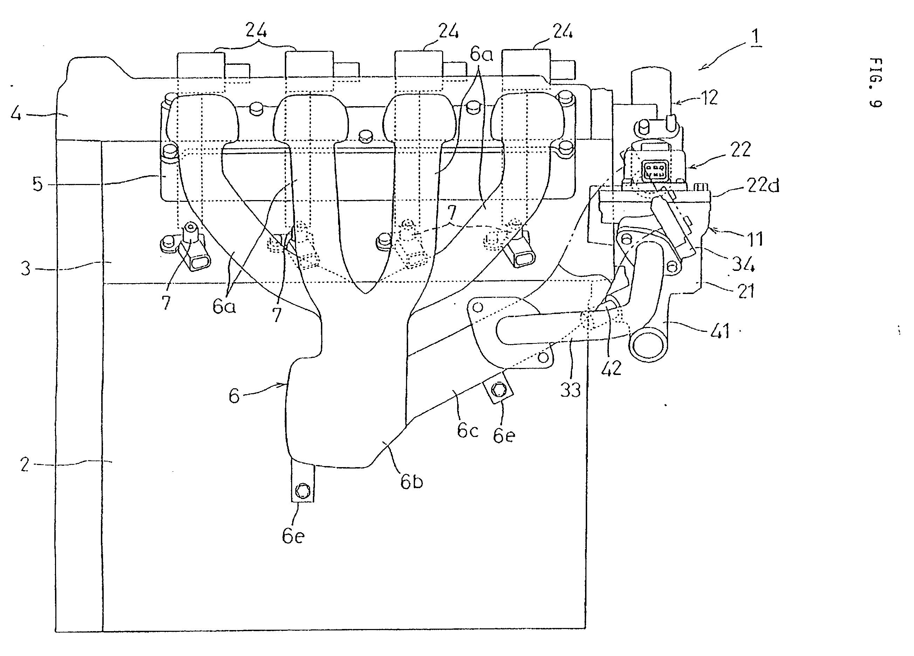

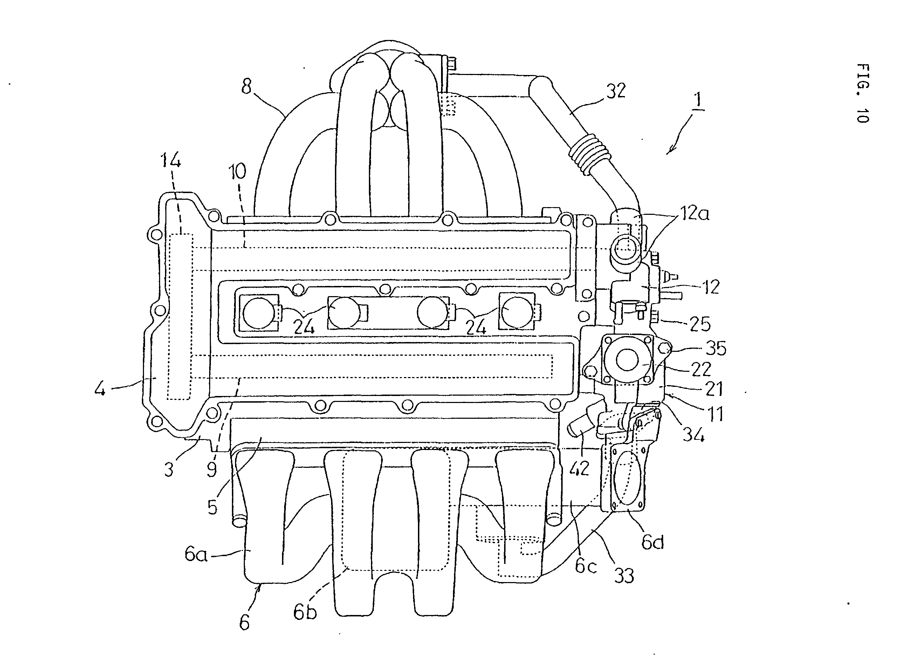

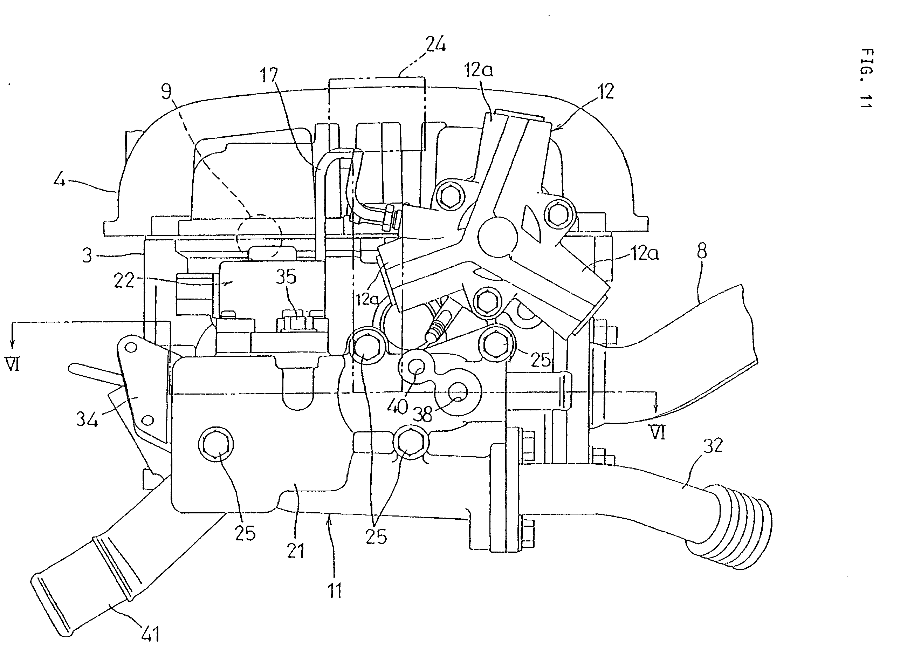

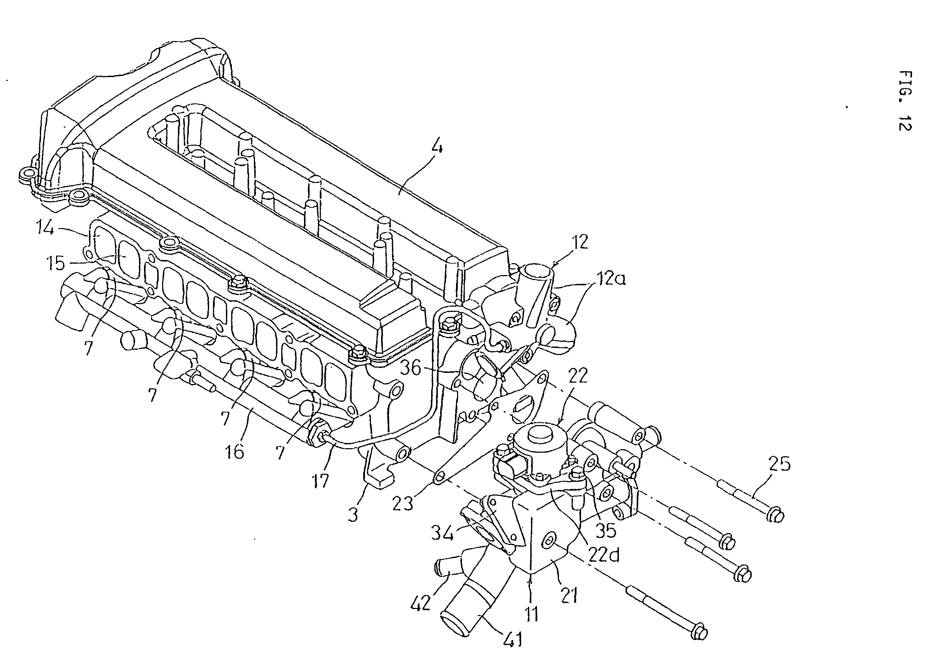

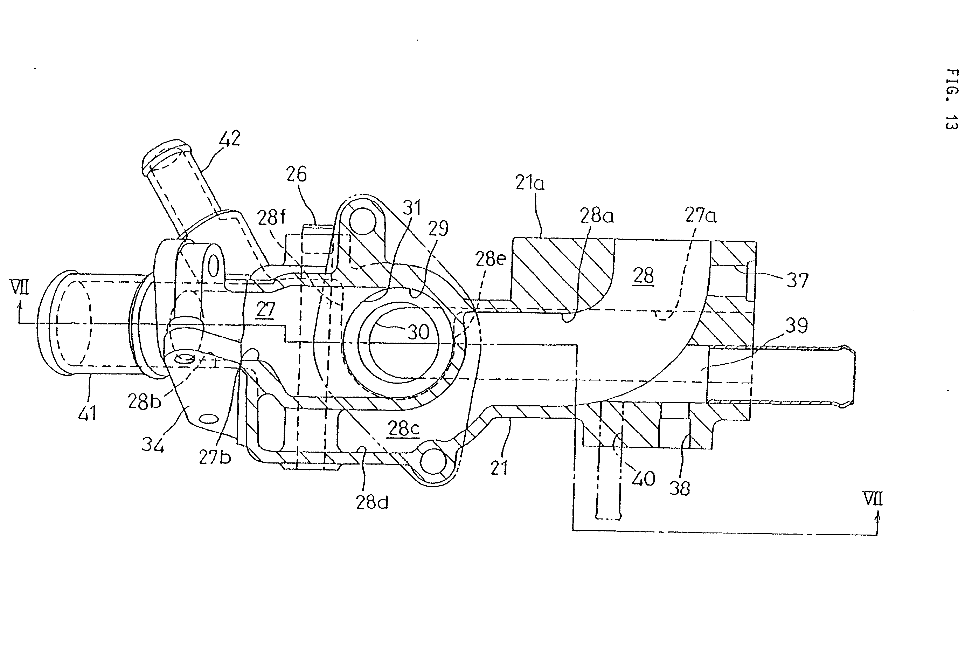

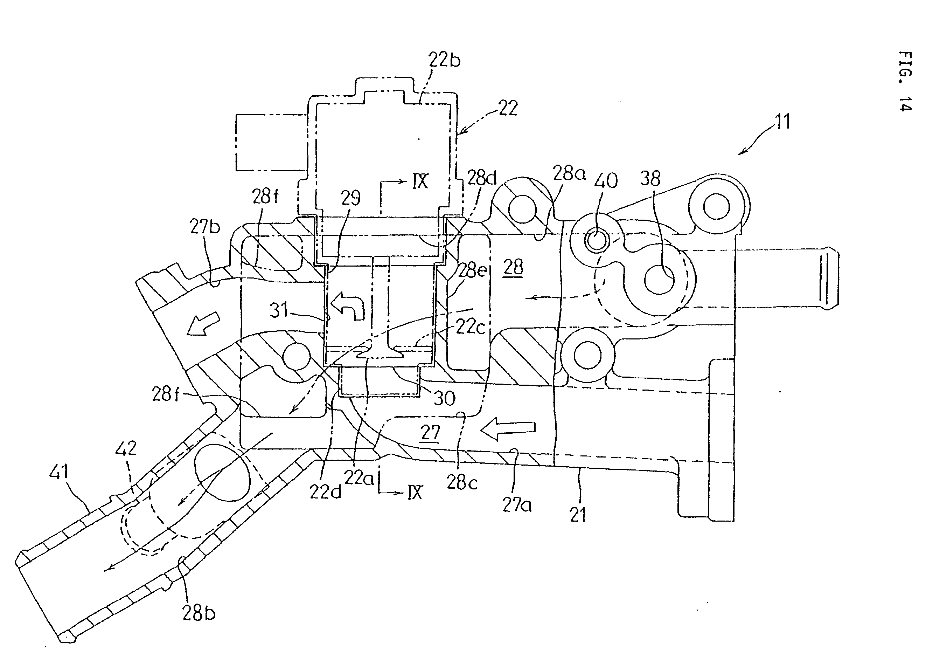

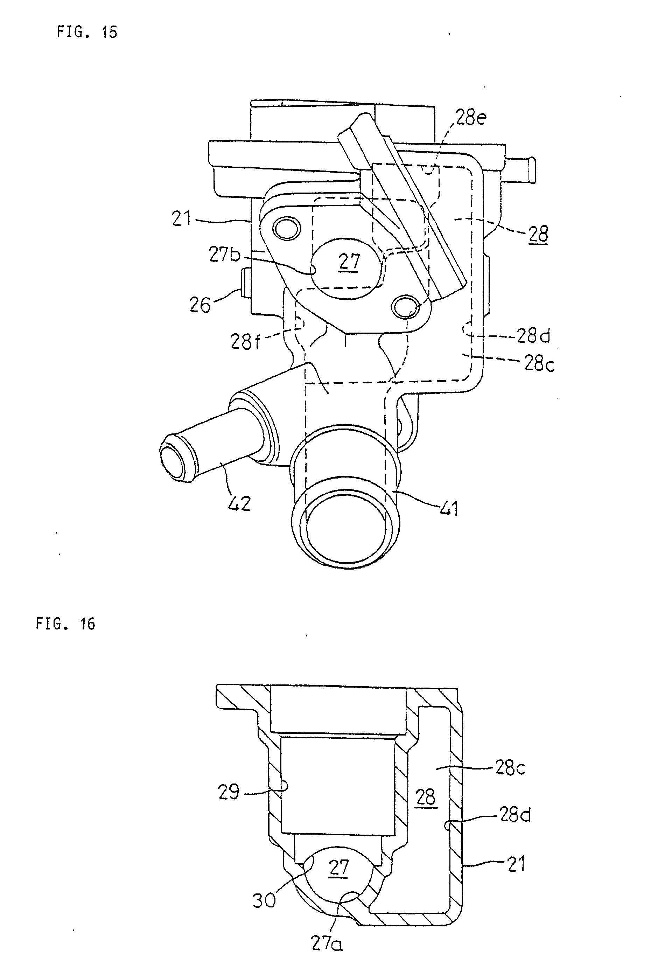

Now, an embodiment of the EGR valve unit for an in-cylinder injection engine according to this invention will be described in detail below with reference to Figs. 8 - 16. Fig. 8 is a front view of the in-cylinder injection engine equipped with the EGR valve unit according to this invention, Fig. 9 a side view of the engine as seen from the intake manifold side, Fig. 10 a plan view of the engine, Fig. 11 an enlarged front view of the mounting portion of the EGR valve unit, Fig. 12 an exploded perspective view of the cylinder head and the EGR valve unit, Fig. 13 a sectional view of the EGR valve unit taken on line VI-VI of Fig. 11, Fig. 14 a sectional view taken on line VII-VII of Fig. 13, Fig. 15 a view of the EGR valve unit as seen from the downstream side, and Fig. 16 a sectional view taken on line IX-IX of Fig. 14.

In these figures, numeral 1 designates an in-cylinder injection engine of this embodiment. The engine 1, of a water-cooling DOHC type four-cylinder automobile engine, comprises a cylinder block 2, cylinder head 3, and head cover 4, etc. The engine 1 is mounted to a vehicle body such that the lateral axis of Fig. 8 is oriented approximately horizontal.

To the cylinder head 3, as shown in Fig. 8, are mounted, on one side, an intake manifold 6 through an intake control valve unit 5, and as shown in Figs. 9 and 12, injectors 7 one for each cylinder, and on the other side, exhaust pipes 8. To one end of the cylinder head 3 in the axial direction of an intake camshaft 9 and an exhaust: camshaft 10 are mounted, as shown in Figs. 8 and 10, an EGR valve unit 11 (described later) and a high pressure fuel pump 12. On the other end of this engine in the axial direction of the two camshafts 9, 10 is disposed, as shown in Fig. 10, a power transmission device 14 for transmitting the rotation of a crankshaft 13 (see Fig. 8) to both camshafts 9, 10.

The intake control valve unit 5 has intake air passages connected to primary ports 14 (see Fig. 12) and, secondary ports 15, each formed for a respective cylinder, and is provided with opening/closing valves for opening/closing the intake passages connected to the secondary ports 15.

The intake manifold 6 comprises branch pipes 6a each formed for a respective cylinder and fixed to the intake control valve unit 5, a surge tank 6b to which branch pipes 6a are connected, and an intake inflow pipe 6c extending from the surge tank 6c toward the EGR valve unit 11 in the axial direction of the intake camshaft 9. At the upstream end of the intake inflow pipe 6c is formed integrally a flange 6d for connecting a throttle valve device (not shown).

Each injector 7 is arranged such that it is disposed between two intake ports for each cylinder, that is, between the primary port 14 and the secondary port 15 and fuel is injected directly into the combustion chamber (not shown) from between both ports and from the bottom (mating surface with the cylinder block) side of the cylinder head. The fuel inlet of each injector 7 is connected to a fuel delivery port of the high pressure fuel pump 12, through a fuel rail designated by numeral 16 in Fig. 12 and a fuel supply pipe 17 connected to one end of the fuel rail 16.

The high pressure pump 12, which is mounted at said one end of the cylinder head 3 on the exhaust camshaft 10 side, is arranged such that the rotation of the exhaust camshaft 10 causes plungers (not shown) to reciprocate in three cylinders 12a to pump, to injectors 7, the fuel supplied from a low pressure fuel pump (not shown).

The EGR valve unit 11, which is fitted in a well-known conventional EGR unit for introducing exhaust gas into the intake passages, comprises, as shown in Fig. 11 and Fig. 12, a valve housing 21 and an EGR control valve 22 mounted to the valve housing 21, the valve housing 21 being fixed to said one end of the cylinder head 3 on the intake camshaft 9 side through a sealing member 23.

Ignition coils, which are mounted to said one end of the cylinder head in the conventional engine, are connected, in this engine 1, directly to the ignition plugs so that a large space may be secured to dispose the EGR valve unit 11 and the high pressure fuel pump 12 on said one end of the cylinder head 3. The ignition device of the engine 1 is arranged such that ignition units 24 with an ignition coil and a switching element are attached to ignition plugs, and ignition signals are sent out from an ignition timing control device not shown in the ignition unit 24.

The EGR valve unit 11 is fixed to the cylinder head 3, as shown in Fig. 11, with four fixing bolts 25, and knock pins 26 are inserted in the bolt fastening portions so as to improve positioning accuracy of fixing (see Fig. 13 and Fig. 15) . This knock pin 26, formed in a cylindrical shape, is fitted, with the fixing bolt 25 passing therethrough, in both of the valve housing 21 and the cylinder head 3.

The valve housing 21 is configured such that as shown in Fig. 8, it extends from one side to which the intake manifold 6 of the cylinder head 3 is connected, to the other side, just under the high pressure fuel pump 12, to which the exhaust pipe 8 is connected, and that as shown in Fig. 14, an exhaust gas passage 27 and a cooling water passage 28 extend, inside the housing, in the same direction as said extending direction of the valve housing 21.

The exhaust gas passage 27 is formed such that a recess 29 for receiving the EGR control valve 22 constitutes part of the passage 27. Specifically, the exhaust gas passage 27 comprises the recess 29 formed in the valve housing 21 and open upward, an upstream section 27a extending from a first communication port 30 formed in the bottom of the recess 29, through the lower portion of the valve housing 21, toward the exhaust camstraft side (right side of Fig. 14), and a downstream section 27b extending from a second communication port 31 formed in the inner wall of the recess 29, through the upper portion of the valve housing 21, in the direction opposite to that of said upstream section 27a.

The upstream end of the exhaust gas passage 27 is open to one end of the valve housing 21 on the right side of Fig. 14, and as shown in Figs. 8 and 10, connected to a collective section 8a of the exhaust pipe 8 through an exhaust gas induction pipe 32.

The downstream end of the exhaust gas passage 27 is open to the other end of the valve housing 21, and as shown in Fig. 10, connected to the intake passage in the intake manifold 6 through an exhaust gas feed pipe 33. The exhaust gas feed pipe 33, made of a metal pipe, is fixed at the upstream end to the valve housing 21, and at the downstream end to the middle of the intake inflow pipe 6c in the intake manifold 6.

The intake inflow pipe 6c is fixed at the upstream end to a bracket formed integral with the valve housing 21 by the flange for mounting throttle valve device 6d. The valve housing 21, which is located with respect to the cylinder head using the knock pins 26, can be connected to the intake manifold 6 with improved accuracy. The intake manifold 6, as shown in Fig. 9, is fixed to the cylinder block 2 by fixing stays 6e provided on the surge tank 6b and on the intake inflow pipe 6c at the downstream side.

The EGR control valve 22 fitted in the recess 29 of the exhaust gas passage 27, is arranged such that a valve designated by numeral 22a in Fig. 14 is reciprocated vertically by a valve drive unit 22b, and the valve 22a, a valve seat 22c, and the valve drive unit 22b are assembled in one case 22d as an assembly. Also, the EGR control valve 22 is fixed, with fixing bolts 35 (see Figs. 9-12) , to the upper portion of the valve housing 21, with the bottom of the case 22d fitted in the recess 29. Mounting position of the EGR control valve 22 is set such that it is located, as shown in Fig. 11, on the intake camshaft 9 side when the valve housing 21 is fixed to the cylinder head 3.

The case 22d is formed with openings for passages of exhaust gas in the bottom wall and a portion, on the inner wall above the valve seat 22c, corresponding to said second communication port 31 so that a space under the valve drive unit 22b constitutes part of the exhaust gas passage. That is, as shown in Fig. 14, engagement of the valve 22a with the valve seat 22c causes the exhaust gas passage to be closed, and downward separation of the valve 22a from the valve seat 22c causes the exhaust gas passage to be opened. Between the case 22d and the valve housing 21 is provided a sealing member (not shown) for preventing exhaust gas from leaking through the gap between the case 22d and the recess 29.

The valve drive unit (22b) is provided with a motor as a power source, and adapted to move the valve 22a to a completely closed position, as shown in Fig. 14, when a throttle valve (not shown) of the engine 1 is closed or the engine 1 is in a high speed and high load operating range, and to move the valve 22a downwardly from the completely closed position when the engine 1 is in a low speed and low load, and an intermediate speed and intermediate load operating range. Opening of the valve 22a is adjusted in response to engine speed and/or engine load.

The cooling water passage 28 comprises, as shown in Figs. 13-16, an upstream section 28a formed above the upstream section 27a of the exhaust gas passage 27 in overlapping relation viewed from above, a downstream section 28b formed below the downstream section 27b of the exhaust gas passage 27 in overlapped relation viewed from above, and a communication section 28c formed in the EGR control valve mounting portion of the valve housing 21 for providing communication between the upstream section 28a and the downstream section 28b.

The upstream section 28a of the cooling water passage 28 is arranged such that its upstream end is open to the mating surface 21a (see Fig. 13) of the valve housing 21 on the cylinder head 3 side, and said opening is connected to a cooling water outlet 36 (see Fig. 12) of the cylinder head 3 when the valve housing 21 is fixed to the cylinder head 3. To the upstream section 28a of the cooling water passage 28 are connected a temperature sensor fitting holes shown in Fig. 13 by numerals 37, 38, a hot water takeout port 39, and an air vent port 40.

The downstream section 28b of the cooling water passage 28 is connected to a radiator (not shown) from a primary drain pipe 41 formed integral with the valve housing 21, through a pipe (not shown) . In this embodiment, a secondary drain pipe 42 is branched off from the primary drain pipe 41, and cooling water is inducted toward the inlet of a cooiing water pump (not shown) from the secondary drain pipe 42 through a bypass pipe (not shown).

The cooling system of the engine 1 has a structure in which cooling water is drawn into the cooling water pump from a radiator through a thermostat, pumped from the cooling water pump to the cylinder block 2 and cylinder head 3, and returned to the radiator from the cooling water outlet 36 through the EGR valve unit 11. When the thermostat is closed, cooling water is inducted into the upstream side from the cooling water pump, from the secondary drain pipe 42 through the bypass pipe without passing through the radiator.

The communication section 28c of the cooling water passage 28 is formed surrounding laterally the recess 29 for receiving the EGR control valve 22. That is, the communication section 28c comprises a first passage 28d adjacent to the wall of the recess 29 opposite to the cylinder head 3, and second and third passages 28e, 28f formed extending in the axial direction of the camshaft on the upstream and downstream sides from the first passage 28d, for providing communication with the upstream section 28a and the downstream section 28b of the cooling water passage 28.

As a result of the exhaust gas passage 27 and the cooling water passage 28 being formed in the valve housing 21, these two passages are overlapped to each other in one end and the other end of the valve housing 21, vertically (in the opening/closing direction of the valve 22a) , and their positions with respect to the opening/closing direction of the valve 22a is reversed on said one end and said other end. Therefore, the exhaust gas passage 27 and the cooling water passage 28 are allowed to cross at the EGR control valve mounting portion of the valve housing 21.

That is, the upstream section 28a of the cooling water passage 28 is located above the upstream section 27a of the exhaust gas passage 27, and the downstream section 28b of the cooling water passage 28 below the downstream section 27b of the exhaust gas passage, so that the exhaust gas passage 27 extends upwardly at the EGR control valve mounting portion, while the cooling water passage 28 extends downwardly at the same portion, both passages crossing at the EGR control valve mounting portion.

in the EGR vaive unit 11 as described above, the EGR control valve 22 is opened during engine running, so that exhaust gas flows into the upstream section 27a of the exhaust gas passage in the valve housing 21 from the exhaust pipe 8 through the exhaust gas induction pipe 32. The exhaust gas flows out to the exhaust gas feed pipe 33 from the upstream section 27a through the EGR control valve 22 and the downstream section 27b of the exhaust gas passage 27, to be inducted from the exhaust gas feed pipe 33 into the intake passage in the intake manifold 6.

On the other hand, cooling water of the engine flows into the cooling water passage 28 in the valve housing 21 from the cooling water outlet 36 in the cylinder head 3, and then from the upstream section 28a of the cooling water passage 28 through the communication section 28c to the downstream section 28b, to be discharged from the downstream section 28b to the radiator (not shown).

As a result of cooling water flowing into the valve housing 21, heat of the valve housing 21 is transmitted by heat transfer to the cooling water. Therefore, exhaust gas flowing through the exhaust gas passage 27, and the EGR control valve 22 mounted to the valve housing 21, can be cooled by cooling water. In addition, the exhaust gas passage 27 and the cooling water passage 28 are adapted to cross in the mounting portion of the EGR control valve, so that cooling water can be inducted in the vicinity of the EGR control valve 22, providing an effective cooling of the EGR control valve 22.

Further, since a structure is adopted in which the exhaust gas passage 27 is opened/closed by a vertically reciprocating valve 22a, the upstream section 27a of the exhaust gas passage 27 is formed below the valve 22a in deviating relation and the downstream section 27b of the exhaust gas passage 27 is formed above the valve 22a in deviating relation. The upstream section 28a and the downstream section 28b of the cooling water passage 28 are formed such that they are overlapped vertically to the upstream section 27a and the downstream section 27b of the exhaust gas passage 27, respectively, so that the cooling water passage 28 can be formed using dead spaces formed over the upstream section 27a and under the downstream section 27b of the exhaust gas passage 27. Thus, the cooling water passage 28 can be formed, with the space increase for the valve housing 21 kept minimum.

in the EGR valve unit 11 of this embodiment, the EGR control valve 22 constitutes an assembly, with a valve 22a, valve seat 22c, and valve drive unit 22b assembled in one case 22d, and this EGR control valve 22 is mounted to the valve housing 21, therefore no valve seat 22c of the EGR control valve 22 is necessary to be provided in the valve housing 21 and no valve seat support section is needed in the valve housing 21.

If the valve seat 22c is provided in the valve housing 21, the valve seat support section must be formed firm enough to receive load applied by the valve 22a at the time of complete closing, that is, heavy wall thickness is required. In addition, walls surrounding the valve seat support section must be formed such that any thermal expansion of the valve housing 21 will not significantly change the position of the valve seat 22c relative to the valve 22a.

However, in this embodiment, no foregoing restrictions are placed on the valve housing 21. As a result, the degree of freedom in designing in the formation of the exhaust gas passage 27 and the cooling water passage 28 in the valve housing 21 is higher and both passages can be formed into ideal shapes.

Further, in the EGR valve unit 11 of this embodiment, if only the shape and size of the recess 29 for receiving the EGR control valve 22 in the valve housing 21 are the same, other portions of the valve housing 21 can be configured freely. That is, even if multiple kinds of valve housings 21 are formed corresponding to the engine models, only one type of EGR control valve 22 may be sufficient.

Furthermore, in the EGR valve unit 11 of this embodiment, the valve housing 21 is fixed to the outer wall of the cylinder head 3, the upstream end of the cooling water passage 28 opened to the mating surface 21 a of the valve housing 21 on the engine side, is connected to a cooling water outlet 36 of the cylinder head 3, and the portion (the communication section 28c) of the cooling water passage 28 corresponding to the EGR control valve 22, is formed such that the EGR control valve 22 is surrounded from at least three sides, including the side of the EGR control valve located opposite to the cylinder head 3. Therefore, the EGR control valve 22 can be cooled, on the cylinder head 3 side, by heat transfer from the valve housing 21 to the cylinder head, and on the opposite side from the cylinder head 3, by cooling water flowing through the cooling water passage 28 formed surrounding the side.

Moreover, the cooling water flows from the cylinder head 3 directly into the valve housing 21, so that no piping is needed for inducting cooling water into the cooling water passage 28 in the valve housing 21.

In addition, in the EGR valve unit 11 of this embodiment, the downstream section 27b of the exhaust gas passage 27 is connected, through a metallic exhaust gas feed pipe 33, to the intake passage in the intake inflow pipe 6c of the intake manifold 6, and the flange 6d at the upstream end of the intake manifold 6 is fixed to the valve housing 21, therefore the middle portion and the upstream end of the intake manifold 6 supported, at its downstream end, on the engine 1, are connected to the valve housing 21.

Therefore, the upstream side of the intake manifold 6, that is, the throttle valve mounting portion protruding from the engine 1, can be supported firmly by the EGR valve unit 11, so that no stay is necessary for supporting only the throttle valve mounting portion.

Although in the embodiment described above, the communication section 28c of the cooling water passage 28 is formed such that the EGR control valve mounting portion is surrounded from three sides, the communication section 28c may be formed so as to surround the cylinder head 3 side or the bottom side of the EGR control valve mounting portion.

According to the invention as described above, heat of the valve housing is transmitted by heat transfer to the cooling water flowing through the cooling water passage, so that the EGR control valve mounted to the valve housing, and exhaust gas flowing through the exhaust gas passage in the valve housing, can be cooled by cooling water. In addition, the exhaust gas passage and the cooling water passage are adapted to cross in the mounting portion of the EGR control valve, so that cooling water can be inducted in the vicinity of the EGR control valve, providing an effective cooling of the EGR control valve.

Therefore, exhaust gas can be cooled, as well as the EGR control valve, which effects a higher charging efficiency of intake air, and the exhaust gas passage and the cooling water passage are formed in one valve housing, which provides a compact EGR valve unit for in-cylinder injection engines.

According to another embodiment of the invention, a structure is adopted in which the exhaust gas passage is opened/closed by a reciprocating valve, so that the upstream side and the downstream side of the exhaust gas passage from the EGR control valve (one end and the other end of the valve housing) are formed such that they are located, in deviating relation, on one side and the other side in the opening/closing direction of the valve, respectively. The upstream side and the downstream side of the cooling water passage are formed such that they are overlapped to the upstream side and the downstream side of the exhaust gas passage, in the opening/closing direction of the valve, respectively, so that the cooling water passage can be formed using dead spaces formed, for the upstream side and the downstream side of the exhaust gas passage, on one side and the other side in the opening/closing direction of the valve.

Thus, the cooling water passage can be formed, with space increase for the valve housing kept minimum.

According to a further embodiment of the invention, since no valve seat of the EGR control valve is necessary to be provided in the valve housing, no valve seat support section is needed in the valve housing. Therefore, the restriction caused by the installation of the valve seat, that is, the restriction of the valve seat support section being formed firm or of preventing positional changes of the valve seat due to thermal expansion, is eliminated, so that the degree of freedom in designing in the formation of the exhaust gas passage and the cooling water passage in the valve housing is higher and both passages can be formed into ideal shapes.

Therefore, the walls in the valve housing are formed thin for a smaller thermal resistance, so that the EGR control valve and exhaust gas can be cooled more efficiently, and the foregoing two passages can be made compact.

Further, in the EGR valve unit according to the invention, if only the shape and size of the mounting portion of the EGR control valve in the valve housing are the same, other portions of the valve housing can be configured freely. That is, even if multiple kinds of valve housings are formed corresponding to the engine models, only one type of EGR control valve may be sufficient. Therefore, multiple kinds of EGR valve unit can be formed while utilizing one type of EGR control valve in common, effecting cost reduction.

According to a still further embodiment of the invention, the EGR control valve is cooled, on the engine side, by heat transfer from the valve housing to the engine, and on the opposite side from the engine, by cooling water flowing through the cooling water passage formed surrounding the side.

Thus, the EGR control valve can be cooled from around the sides, providing an efficient cooling of the EGR control valve. In addition, the cooling water flows from the engine directly into the valve housing without interposing a pipe, so that no piping is needed for inducting cooling water into the cooling water passage in the valve housing, which effects smaller size as well.

According to another embodiment of the invention, the middle portion and the upstream end of the intake manifold supported, at its downstream end, on the engine, are connected to the valve housing, so that the throttle valve mounting portion protruding from the engine, can be supported firmly by the EGR valve unit.

Thus, no stay is necessary for supporting only the throttle valve mounting portion, so that the intake system can be formed compact by utilizing the EGR valve unit.

## Claims

1. An in-cylinder injection engine (1) wherein one of a high pressure fuel pump (12) for pumping fuel to injectors (7) for injecting fuel directly into a combustion chamber, and an EGR valve unit (11), is mounted to one end of a cylinder head (3), in the axial direction of a camshaft, on the side of an intake camshaft (9), and the other, on the side of an exhaust camshaft (10).

2. The in-cylinder injection engine according to claim 1, **characterized in that** the EGR valve unit (11) is located on the intake camshaft side (9).

3. The in-cylinder injection engine according to claim 1, **characterized in that** the high pressure fuel pump (12) is located on the intake camshaft side (9).

4. The in-cylinder injection engine according to at least one of the claims 1 to 3, **characterized in that** ignition units (24) with an ignition coil and a switching element are mounted to ignition plugs, and ignition signals are sent to said ignition units (24) from an ignition timing control device.

5. The in-cylinder injection engine according to at least one of the claims 1 to 4, **characterized in that** the EGR unit (11) comprises an EGR control valve (22) and a valve housing (21) with said EGR control valve (22) therein, said valve housing (21) being formed with an exhaust gas passage (27) and a cooling water passage (28) each extending from one end to the other end of said valve housing (21), and said exhaust gas passage (27) and cooling water passage (28) being adapted to cross in the vicinity of the mounting portion of the EGR control valve (22) in the valve housing (21).

6. In-cylinder injection engine according to claim 5, **characterized in that** the EGR control valve (22) has a valve (22a) adapted to reciprocate therein, the exhaust gas passage (27) and cooling water passage (28) are formed such that they are overlapped to each other in one end and the other end of the valve housing (21), in the opening/closing direction of said valve (22a), and their positions with respect to the opening/closing direction of said valve (22a) are reversed at said one end and said other end.

7. In-cylinder injection engine according to claim 5 or 6, **characterized in that** the EGR control valve (22) is configured as an assembly with a valve (22a), a valve seat (22c), and a valve drive unit (22b) assembled in one case (22d), and said EGR control valve (22) is mounted to the valve housing (21).

8. In-cylinder injection engine according to at least one of the claims 5 to 7, **characterized in that** the valve housing (21) is fixed to the outer wall of the engine (1), the upstream end of the cooling water passage (28) is open to the mating surface of the valve housing (21) on the engine side, to be connected to a cooling water outlet (36) of the engine (1), and the portion of the cooling water passage corresponding to the EGR control valve (22) is formed such that the EGR control valve (22) is surrounded from at least three sides, including the side of the EGR control valve (22) located opposite to the engine (1).

9. In-cylinder injection engine according to claim 8, **characterized in that** the downstream side of the exhaust gas passage (27) is connected, through a metal pipe (33), to an intake passage in the middle of an intake manifold (6), and the upstream end of the intake manifold (6) is fixed to the valve housing (21).

10. In-cylinder injection engine according to at least one of the claims 5 to 9, **characterized in that** the valve housing (21) extending from a manifold side of a cylinder head (3) to the side to which an exhaust pipe (8) is connected.

11. In-cylinder injection engine according to claim 10, **characterized in that** the valve housing (21) being provided below the high pressure fuel pump (21).

12. In-cylinder injection engine according to claim 10 or 11, **characterized in that** the valve housing (21) being fixed to the cylinder head (3) on the intake camshaft side through a sealing member (23),

13. In-cylinder injection engine according to at least one of the claims 5 to 12, **characterized in that** the exhaust gas passage (27) comprising a recess (29) for receiving the EGR control valve (22).

14. In-cylinder injection engine according to at least one of the claims 5 to 13, **characterized in that** an upstream section (28a) and a downstream section (28b) of the cooling water passage (28) are formed such that they overlap an upstream section (27a) and a downstream section (27b) of the exhaust gas passage (27) in vertical direction.

15. In-cylinder injection engine according to at least one of the claims 1 to 14, **characterized in that** the engine is of the DOHC type comprising four cylinders.

## Patentansprüche

1. Brennkraftmaschine (1) mit In- Zylindereinspritzung, wobei eine Hochdruck- Kraftstoffpumpe (12) zum Pumpen von Kraftstoff zu den Einspritzem (7) zum direkten Einspritzen von Kraftstoff in eine Verbrennungskammer oder eine Abgasrückführungs- Ventileinheit (11) an einem Ende eines Zylinderkopfes (3) in der axialen Richtung einer Nockenwelle auf der Seite einer Einlassnockenwelle (9), und die jeweils andere der beiden auf der Seite einer Abgasnockenwelle (10) montiert ist.

2. Brennkraftmaschine mit In- Zylindereinspritzung nach Anspruch 1, **dadurch gekennzeichnet, dass** die Abgasrückführungs- Ventileinheit (11) auf der Seite der Einlassnockenwelle (9) angeordnet ist.

3. Brennkraftmaschine mit In- Zylindereinspritzung nach Anspruch 1, **dadurch gekennzeichnet, dass** die Hochdruck- Kraftstoffpumpe (12) auf der Seite der Einlassnockenwelle (9) angeordnet ist.

4. Brennkraftmaschine mit In- Zylindereinspritzung nach zumindest einem der Ansprüche 1 bis 3, **dadurch gekennzeichnet, dass** die Zündeinheiten (24) mit einer Zündspule und einem Schaltelement an Zündkerzen montiert sind und Zündsignale zu den Zündeinheiten (24) von einer Zündzeitpunkt- Steuereinheit gesandt werden.

5. Brennkraftmaschine mit In- Zylindereinspritzung nach zumindest einem der Ansprüche 1 bis 4, **dadurch gekennzeichnet, dass** die Abgasrückführungs- Einheit (11) ein Abgasrückführungs- Steuerventil (22) und ein Ventilgehäuse (21) mit dem darin befindlichen Abgasrückführungs- Steuerventil (22) aufweist, wobei das Ventilgehäuse (21) mit einem Abgaskanal (27) und einem Kühlwasserkanal (28) gebildet ist, die sich jeweils von einem Ende zu dem anderen Ende des Ventilgehäuses (21) erstrecken und der Abgaskanal (27) und der Kühlwasserkanal (27) vorgesehen sind, sich in der Nähe des Montageabschnittes des Abgasrückführungs- Steuerventiles (22) in dem Ventilgehäuse (21) zu kreuzen.

6. Brennkraftmaschine mit In- Zylindereinspritzung nach Anspruch 5, **dadurch gekennzeichnet, dass** das Abgasrückführungs- Steuerventil (22) ein Ventil (22a) hat, vorgesehen um darin hin- und herzugehen, der Abgaskanal (27) und der Kühlwasserkanal (28) derart gebildet sind, dass sie zueinander in einem Ende und dem anderen Ende des Ventilgehäuses (21) in der Öffnungs- / Schließrichtung des Ventiles (22a) überlappt sind und ihre Positionen in Bezug in die Öffnungs- Schließrichtung des Ventils (22a) an dem einen Ende und dem anderen Ende zueinander umgekehrt sind.

7. Brennkraftmaschine mit In- Zylindereinspritzung nach Anspruch 5 oder 6, **dadurch gekennzeichnet, dass** das Abgasrückführungs- Steuerventil (22) als eine Anordnung mit einem Ventil (22a), einem Ventilsitz (22c) und einer Ventilantriebseinheit (22b) konfiguriert ist, angeordnet in einem Gehäuse (22d), und das Abgasrückführungs- Steuerventil (22) an dem Ventilgehäuse (21) montiert ist.

8. Brennkraftmaschine mit In- Zylindereinspritzung nach zumindest einem der Ansprüche 5 bis 7, **dadurch gekennzeichnet, dass** das Ventilgehäuse (21) an der Außenwand des Motors (1) befestigt ist, das stromaufwärtige Ende des Kühlwasserkanals (28) zu den dazu passenden Oberfläche des Ventilgehäuses (21) auf der Motorseite offen ist, um mit einem Kühlwasserauslass (36) des Motors (1) verbunden zu werden, und der Abschnitt des Kühlwasserkanals (28), der dem Abgasrückführungs- Steuerventil (22) entspricht, derart gebildet ist, dass das Abgasrückführungs- Steuerventil (22) von zumindest drei Seiten umgeben ist, einschließlich der Seite des Abgasrückführungs- Steuerventils (22), die dem Verbrennungsmotor (1) gegenüberliegt.

9. Brennkraftmaschine mit In- Zylindereinspritzung nach Anspruch 8, **dadurch gekennzeichnet, dass** die stromabwärtige Seite des Abgaskanales (27) durch ein Metallrohr (33) mit einem Einlasskanal in der Mitte eines Einlassverteilers (6) verbunden ist, und das stromaufwärtige Ende des Einlassverteilers (6) an dem Ventilgehäuse (21) befestigt ist.

10. Brennkraftmaschine mit In- Zylindereinspritzung nach zumindest einem der Ansprüche 5 bis 9, **dadurch gekennzeichnet, dass** das Ventilgehäuse (21) sich von einer Verteiler- Seite eines Zylinderkopfes (3) zu der Seite erstreckt, mit der ein Abgasrohr (8) verbunden ist.

11. Brennkraftmaschine mit In- Zylindereinspritzung nach Anspruch 10, **dadurch gekennzeichnet, dass** das Ventilgehäuse (21) unter der Hochdruckkraftstoffpumpe (21) vorgesehen ist.

12. Brennkraftmaschine mit In- Zylindereinspritzung nach Anspruch 10 oder 11, **dadurch gekennzeichnet, dass** das Ventilgehäuse (21) an dem Zylinderkopf (3) auf der Seite der Einlassnockenwelle durch ein Abdichtteil (23) befestigt ist.

13. Brennkraftmaschine mit In- Zylindereinspritzung nach zumindest einem der Ansprüche 5 bis 12, **dadurch gekennzeichnet, dass** der Abgaskanal (27) eine Aussparung (29) zum Aufnehmen des Abgasrückführungs- Steuerventiles (22) aufweist.

14. Brennkraftmaschine mit In- Zylindereinspritzung nach zumindest einem der Ansprüche 5 bis 13, **dadurch gekennzeichnet, dass** ein stromaufwärtiger Abschnitt (28a) und ein stromabwärtiger Abschnitt (28b) des Kühlwasserkanales (28) derart gebildet sind, dass sie einen stromaufwärtigen Abschnitt (27a) und einen stromabwärtigen Abschnitt (27b) des Abgaskanales (27) in einer vertikalen Richtung überlappen.

15. Brennkraftmaschine mit In- Zylindereinspritzung nach zumindest einem der Ansprüche 1 bis 14, **dadurch gekennzeichnet, dass** der Motor von der DOHC- Art mit zwei obenliegenden Nockenwellen ist, der vier Zylinder aufweist.

## Revendications

1. Moteur à injection directe (1), dans lequel l'une d'une pompe à combustible haute pression (12), servant au pompage de combustible vers des injecteurs (7) afin d'injecter directement du combustible dans une chambre de combustion, et d'une unité formant soupape EGR (de recirculation des gaz d'échappement) (11), est montée sur une extrémité d'une culasse (3) dans le sens axial d'un arbre à cames, du côté d'un arbre à cames d'admission (9), tandis que l'autre est montée du côté d'un arbre à cames d'échappement (10).

2. Moteur à injection directe selon la revendication 1, **caractérisé en ce que** l'unité formant soupape EGR (11) est située du côté de l'arbre à cames d'admission (9).

3. Moteur à injection directe selon la revendication 1, **caractérisé en ce que** la pompe à combustible haute pression (12) est située du côté de l'arbre à cames d'admission (9).

4. Moteur à injection directe selon au moins l'une des revendications 1 à 3, **caractérisé en ce que** des unités d'allumage (24), comportant une bobine d'allumage et un élément de commutation, sont montées sur les bougies d'allumage, et **en ce que** des signaux d'allumage sont envoyés auxdites unités d'allumage (24) à partir d'un dispositif de commande de calage d'allumage.

5. Moteur à injection directe selon au moins l'une des revendications 1 à 4, **caractérisé en ce que** l'unité EGR (11) comprend une soupape de commande EGR (22) et un boîtier de soupape (21) dans lequel est logée ladite soupape de commande EGR (22), ledit boîtier de soupape (21) présentant un passage de gaz d'échappement (27) et un passage d'eau de refroidissement (28), qui s'étendent chacun depuis une extrémité jusqu'à l'autre extrémité dudit boîtier de soupape (21), et dans lequel ledit passage de gaz d'échappement (27) et ledit passage d'eau de refroidissement (28) sont propres à se croiser à proximité de la partie de montage de la soupape de commande EGR (22) dans le boîtier de soupape (21).

6. Moteur à injection directe selon la revendication 5, **caractérisé en ce que** la soupape de commande EGR (22) comporte un clapet (22a) propre à effectuer un mouvement alternatif à l'intérieur de celle-ci, et **en ce que** le passage de gaz d'échappement (27) et le passage d'eau de refroidissement (28) sont formés de manière à être à chevauchement dans une extrémité et dans l'autre extrémité du boîtier de soupape (21), dans le sens d'ouverture/fermeture dudit clapet (22a), tandis que leurs positions, par rapport au sens d'ouverture/fermeture dudit clapet (22a), sont inversées au niveau de ladite une extrémité et de ladite autre extrémité.

7. Moteur à injection directe selon la revendication 5 ou 6, **caractérisé en ce que** la soupape de commande EGR (22) est configurée en tant qu'ensemble comportant un clapet (22a), un siège de clapet (22c) et une unité d'entraînement de soupape (22b), assemblés dans une boîte (22d), et **en ce que** ladite soupape de commande EGR (22) est montée sur le boîtier de soupape (21).

8. Moteur à injection directe selon au moins l'une des revendications 5 à 7, **caractérisé en ce que** le boîtier de soupape (21) est fixé sur la paroi extérieure du moteur (1), l'extrémité amont du passage d'eau de refroidissement (28) est ouverte vers la surface d'accouplement du boîtier de soupape (21) sur le côté du moteur, pour être reliée à un orifice de sortie d'eau de refroidissement (36) du moteur (1), et **en ce que** la partie du passage d'eau de refroidissement, qui correspond à la soupape de commande EGR (22), est formée de telle sorte que la soupape de commande EGR (22) soit entourée sur au moins trois côtés, y compris le côté de la soupape de commande EGR (22) qui est situé de façon opposée au moteur (1).

9. Moteur à injection directe selon la revendication 8, **caractérisé en ce que** le côté aval du passage de gaz d'échappement (27) est relié, par l'intermédiaire d'un tuyau métallique (33), à un passage d'admission au milieu d'une tubulure d'admission (6), et **en ce que** l'extrémité amont de la tubulure d'admission (6) est fixée au boîtier de soupape (21).

10. Moteur à injection directe selon au moins l'une des revendications 5 à 9, **caractérisé en ce que** le boîtier de soupape (21) s'étend à partir d'un côté collecteur d'une culasse (3) jusqu'au côté auquel est relié un tuyau d'échappement (8).

11. Moteur à injection directe selon la revendication 10, **caractérisé en ce que** le boîtier de soupape (21) est prévu au-dessous de la pompe de combustible haute pression (21).

12. Moteur à injection directe selon la revendication 10 ou 11, **caractérisé en ce que** le boîtier de soupape (21) est fixé à la culasse (3) du côté de l'arbre à cames d'admission, par l'intermédiaire d'un élément d'étanchéité (23).

13. Moteur à injection directe selon au moins l'une des revendications 5 à 12, **caractérisé en ce que** le passage de gaz d'échappement (27) comprend un évidement (29) pour recevoir la soupape de commande EGR (22).

14. Moteur à injection directe selon au moins l'une des revendications 5 à 13, **caractérisé en ce qu'**une section amont (28a) et une section aval (28b) du passage d'eau de refroidissement (28) sont formées de telle manière qu'elles recouvrent, dans le sens vertical, une section amont (27a) et une section aval (27b) du passage de gaz d'échappement (27).

15. Moteur à injection directe selon au moins l'une des revendications 1 à 14, **caractérisé en ce que** le moteur est du type DOHC (à soupapes symétriques) comprenant quatre cylindres.
